# EUROPÄISCHE PATENTSCHRIFT

(11) **EP 2 671 307 B1**
(45) Veröffentlichungstag und Bekanntmachung des Hinweises auf die Patenterteilung: **09.03.2016**
(21) Anmeldenummer: 11796705.9
(22) Anmeldetag: 15.12.2011
(51) Int. Cl.: H02K 5/136

(54) **GLEICHSTROM-ELEKTROMOTOR IN EXPLOSIONSGESCHÜTZTER BAUART**
DIRECT CURRENT ELECTRIC MOTOR IN AN EXPLOSION PROOF DESIGN
MOTEUR ÉLECTRIQUE À COURANT CONTINU EN CONSTRUCTION ANTIDÉFLAGRANTE

(30) Priorität: 04.02.2011 DE 202011002408 U
(43) Veröffentlichungstag der Anmeldung: 11.12.2013
(73) Patentinhaber: EBM-Papst Mulfingen GmbH&CO. KG, 74673 Mulfingen (DE)
(72) Erfinder: MASCHKE, Matthias, 74635 Kupferzell (DE); BEST, Dieter, 74653 Ingelfingen (DE); SAUER, Thomas, 65510 Idstein (DE); STRÖBEL, Wolfgang, 74572 Blaufelden (DE)
(74) Vertreter: Peter, Julian
(86) Internationale Anmeldenummer: PCT/EP2011/072869
(87) Internationale Veröffentlichungsnummer: WO 2012/103983

(56) Entgegenhaltungen:
- EP-A1- 2 166 648
- DE-A1- 19 723 913
- DE-A1-102004 004 227

## Beschreibung

Die vorliegende Erfindung betrifft einen Gleichstrom-Elektromotor mit einem Motorwicklungen aufweisenden Stator und einem diesen umfassenden als Außenläufer ausgebildeten Rotor sowie mit einem Motorgehäuse, bestehend aus einem Klemmkastenabschnitt und einem den Rotor und den Stator aufweisenden Motorabschnitt sowie einem zwischen dem Motorabschnitt und dem Klemmkastenabschnitt angeordneten Elektronikgehäuseabschnitt, in dessen Innenraum eine Motorelektronik angeordnet ist.

Bei einem derartigen bekannten Elektromotor ergibt sich die Anforderung als Antrieb für Lüfter in einer explosiven Gasatmosphäre verwendbar zu sein.

Aus der EP 1160960 B1 ist eine Motoranordnung mit einem elektronisch kommutierten Elektromotor bekannt, bei dem zwischen dem Motorstromkreis und dem Sensorstromkreis eine vollständige galvanische Trennung vorhanden ist und wobei sich eine Leiterplatte, die die Motorelektronik aufweist, einschließlich der Kommutierungselektronik, in einem separaten explosionsgeschützten Gehäuse mit druckfester Kapselung getrennt vom Motorgehäuse befindet.

Die DE 197 23 913 A1 offenbart einen explosionsgeschützten, drehzahlregelbaren Asynchronmotor mit einem Frequenzumrichter, wobei der Frequenzumrichter in einem besonderen Gehäuse gekapselt, vorzugsweise sandgekapselt oder vergussgekapselt oder ölgekapselt, untergebracht ist und wobei der Frequenzumrichter und das umhüllende Gehäuse ein explosionsgeschütztes Bauteil in einer anerkannten Zündschutzart bilden.

Die getrennte Anordnung der Steuerelektronik in einem von dem Elektromotorgehäuse separierten Gehäuse ist aber in vielen Anwendungsfällen unerwünscht und aus Platzgründen nicht möglich.

Der vorliegenden Erfindung liegt die Aufgabe zu Grunde, einen Motor der eingangs beschriebenen Art, der sich durch eine kompakte Bauform unter Integration der Motorelektronik im Motorgehäuse auszeichnet, in explosionsgeschützter Bauart auszugestalten, so dass er insbesondere der EG-Richtlinie 94/9/EG (ATEX) Zone 1 und 2 mit den Explosionsuntergruppen IIA und IIB und den Temperaturklassen T1 bis T3 für Gase genügt.

Erfindungsgemäß wird dies bei einem gattungsgemäßen Gleichstrom-Elektromotor dadurch erreicht, dass der Elektronikgehäuseabschnitt in explosionsgeschützter Bauart nach der EG-Richtlinie 94/9/EG gemäß II 2G Ex d e ib ausgebildet ist, dessen innerer Raum eine druckfeste Kapselung nach EN60079-1 bildet, und wobei die anderen Motorabschnitte als Bereiche mit erhöhter Sicherheit nach EN60079-7 ausgebildet sind. Die Erfindung basiert dabei auf der Erkenntnis, dass im Elektronikbereich selber Zündungen des Gases durch elektrische Überschläge zulässig sein können, wobei diese Zündungen nicht zu einer Flammenbildung in den übrigen Motorbereichen führen dürfen. Hierbei liegt der Erfindung der Gedanke zu Grunde, dass der Elektronikbereich entsprechend druckfest ausgebildet werden kann, jedoch die übrigen Motorbereiche auf Grund der vorhandenen notwendigen Dichtungen und auf Grund dessen, dass sie beispielsweise zu Reparaturzwecken geöffnet werden müssen, bzw. der Motorbereich, bestehend aus Stator und Rotor ebenfalls vorteilhafterweise nicht druckdicht gekapselt werden sollte, als Bereiche mit erhöhter Sicherheit nach EN60079-7 gestaltet sind.

Weiterhin sind erfindungsgemäß zwischen dem Innenraum des Elektronikgehäuseabschnitts und dem Motorbereich mit erhöhter Sicherheit Kontaktdurchführungen angeordnet, deren Ringspalt in Bezug auf ihre Spaltweite und Spaltlänge derart bemessen sind, dass am im Bereich der erhöhten Sicherheit liegenden Spaltende des jeweiligen Ringspaltes eine Temperatur vorhanden ist, die in jedem Betriebszustand des Elektromotors unterhalb einer gasspezifischen Zündtemperatur eines den Elektromotor umgebenden Gases liegt.

In weiterer Ausgestaltung der Erfindung, wobei der Stator aus einer Statorbuchse und einem Statorflansch besteht, der mit dem Klemmkastenbereich lösbar verbunden ist, ist ein zwischen dem Statorflansch und dem Klemmkastenbereich befindlicher, vom Innenraum des Elektronikgehäuses in radialer Richtung verlaufender Spaltabschnitt in seiner Länge und in seiner Spaltweite derartig ausgebildet, dass in jedem Betriebszustand des Elektromotors am äußeren Spaltende eine Temperatur vorhanden ist, die unterhalb einer gasspezifischen Zündtemperatur eines den Elektromotor umgebenden Gases liegt. Erfindungsgemäß ist weiterhin in der Statorbuchse des Stators eine Rotorwelle drehbar gelagert, und ein zwischen der Rotorwelle und der Statorbuchse befindlicher, in axialer Richtung der Rotorwelle verlaufender, vom Innenraum des Elektronikgehäuses aus nach außen laufender Umfangsspalt ist in Bezug auf seine Spaltweite und seine Spaltlänge derart bemessen, dass in jedem Betriebszustand des Elektromotors am außenliegenden Ende des Umfangsspaltes eine Temperatur vorhanden ist, die unterhalb einer gasspezifischen Zündtemperatur eines den Elektromotor umgebenden Gases liegt. Auf Grund der erfindungsgemäßen Ausbildungen der jeweiligen Spalte wird somit sichergestellt, dass am jeweiligen äußeren Spaltende eine Temperatur vorhanden ist, die keine Entzündung des vorhandenen Gases in den übrigen Motorbereichen bewirken kann.

Weiterhin ist es erfindungsgemäß von Vorteil, wenn die Kontakt- und Kabeldurchführungen innerhalb des Klemmkastenbereichs sowie innerhalb des Motorabschnitts vorhandene elektrische Anschlüsse und Anschlusskontakte sowie Bauteile in der Bauart nach der EG-Richtlinie 94/9/EG (ATEX) für erhöhte Sicherheit nach EN60079-7 ausgebildet sind. Hierbei kann es sich um bereits für diesen Sicherheitsbereich marktgängige Bauteile handeln, ggf. kann auch ein spezieller entsprechend geeigneter elektrisch isolierender Verguss der Bauteile innerhalb beispielsweise des Motorabschnitts erfolgen.

Weitere vorteilhafte Ausbildungen der Erfindung sind in den Unteransprüchen enthalten.

An Hand des in den beiliegenden Zeichnungen dargestellten Ausführungsbeispiels wird die Erfindung näher erläutert. Es zeigen:
Fig. 1 einen Längsschnitt durch einen erfindungsgemäßen Elektromotor gemäß der Schnittlinie I-I in Fig. 2,
Fig. 2 eine Ansicht gemäß Pfeil II in Fig. 1,
Fig. 3 eine Einzelheit bei III in Fig. 1,

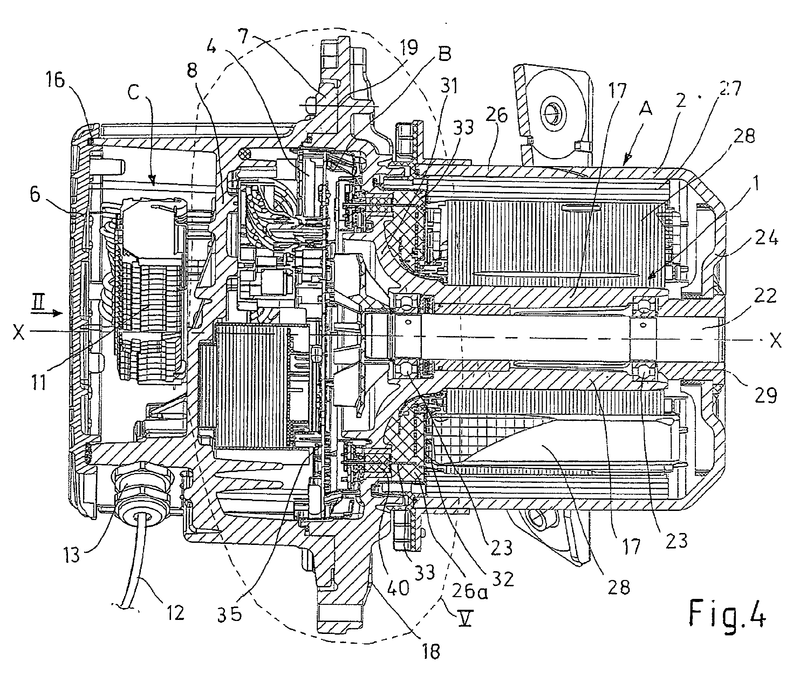

Fig. 4 einen Längsschnitt entlang der Schnittlinie IV-IV in Fig. 2 und
Fig. 5 eine Einzelheit bei V in Fig. 4.

In den einzelnen Figuren der Zeichnungen sind gleiche Teile stets mit denselben Bezugsziffern gekennzeichnet und werden daher auch jeweils nur einmal beschrieben.

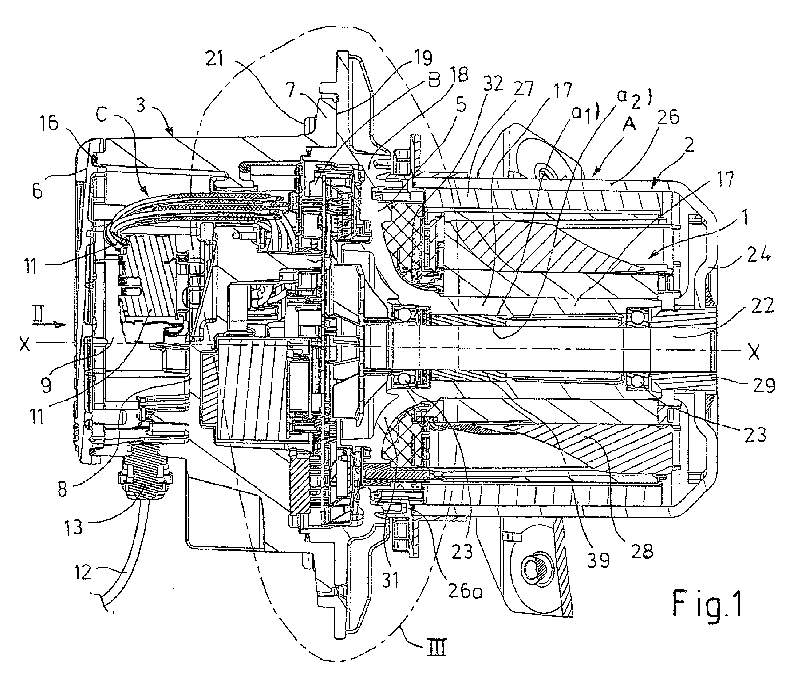

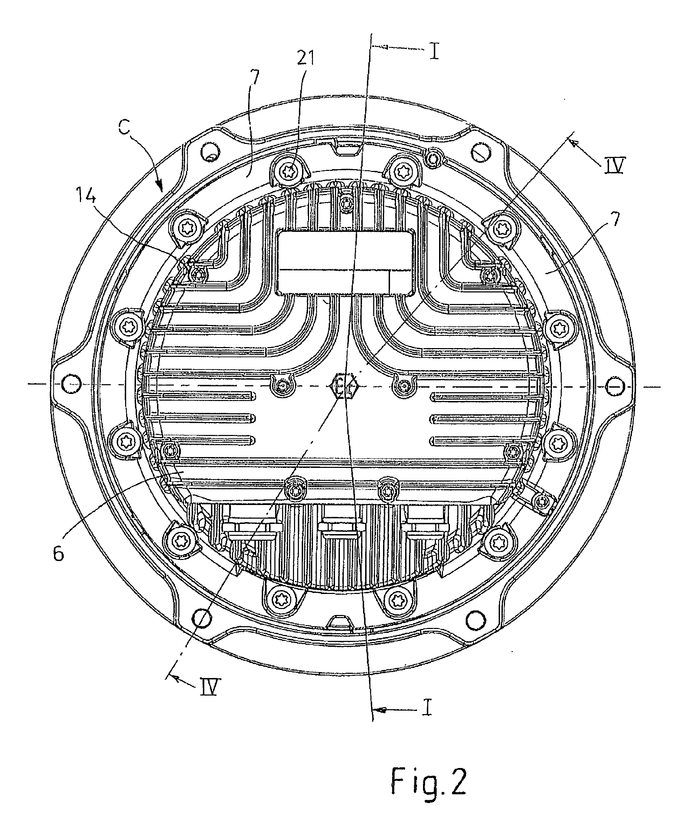

Die vorliegende Erfindung, siehe Fig. 1, betrifft einen elektrischen Gleichstrom-Motor, bestehend aus einem innenliegenden Stator 1 und einem diesen umgebenden, als Außenläufer ausgebildeten Rotor 2. Der Stator 1 und der Rotor 2 bilden einen Motorabschnitt A. Hierbei handelt es sich vorzugsweise um einen elektronisch kommutierten Gleichstrom-Motor (EC-Motor). Dieser Elektromotor ist in explosionsgeschützter Bauart entsprechend der EG-Richtlinie 94/9/EG (ATEX) nach der Kennzeichnung II 2G Ex d e ib ausgebildet. Der erfindungsgemäße Elektromotor weist ein Motorgehäuse 3 auf, das sich aus einem Klemmkastenabschnitt C und einem Statorträger 5 zusammensetzt. Der Klemmkastenabschnitt C ist hohlzylindrisch geformt und besitzt einen einendig befestigten Deckel 6 und an seinem dem Deckel 6 gegenüberliegenden Ende einen radial nach außen abstehenden einstückig angeformten Ringflansch 7. Der Klemmkastenabschnitt C einschließlich Deckel 6 und Ringflansch 7 ist vorzugsweise als Druckgussteil, insbesondere aus Aluminium hergestellt. Im Innern weist der Klemmkastenabschnitt C in einem bestimmten Abstand vom Deckel 6 in axialer Richtung einer mittleren MotorLängsachse X-X gesehen eine durchgehende Trennwand 8 auf, die den Klemmkastenabschnitt C im Innern verschließt, so dass zwischen dem Deckel 6 und der Trennwand 8 ein Hohlraum 9 ausgebildet ist, in dem elektrische Anschlussklemmen 11 angeordnet sind. In diesen Hohlraum 9 wird ein elektrisches Anschlusskabel 12 mittels einer Kabelverschraubung 13 eingeführt und innerhalb des Hohlraums 9 wird das elektrische Anschlusskabel 12 mit den elektrischen Anschlussklemmen 11 verbunden. Gemäß der Erfindung ist zur Erfüllung der Explosionsschutz-Richtlinien der Klemmkastenabschnitt C als Bereich erhöhter Sicherheit gemäß der DIN-Norm 60079-7 ausgebildet. Hierbei sind die im Klemmkastenabschnitt C befindlichen elektrischen Anschlusskontakte bzw. elektrischen Anschlussklemmen 11, die vorzugsweise als ein geschlossener Klemmenblock ausgebildet sind, derart gestaltet, dass die elektrischen Anschlusskontakte bzw. -klemmen selbst die geforderte Norm in Bezug auf erhöhte Sicherheit erfüllen. Derartige Anschlussklemmen-Bauteile können als marktübliche Bauteile beschafft werden. Die Kabelverschraubung 13, bei der es sich ebenfalls um ein auf dem Markt käufliches Teil handelt, ist ebenfalls entsprechend den Anforderungen zur erhöhten Sicherheit gemäß EN60079-7 ausgebildet. Die Kabelverschraubung 13 ist in eine Öffnung des Klemmkastenabschnittes C eingesetzt. Der Deckel 6 ist mittels am Deckelumfang verteilter Schrauben 14 (Fig. 2) mit dem Klemmkastenabschnitt C verschraubt. Im Anlagebereich zwischen dem Deckel 6 und einer stirnseitigen Anlagefläche des Klemmkastenabschnitts C ist gegenüber den Schrauben 14 in Richtung auf den Hohlraum 9 des Klemmkastenabschnitts C versetzt eine Umfangsdichtung 16 angeordnet, die einer Abdichtung gemäß der DIN Norm IP-54 für Spritzwasserschutz und Staubdichtigkeit entspricht.

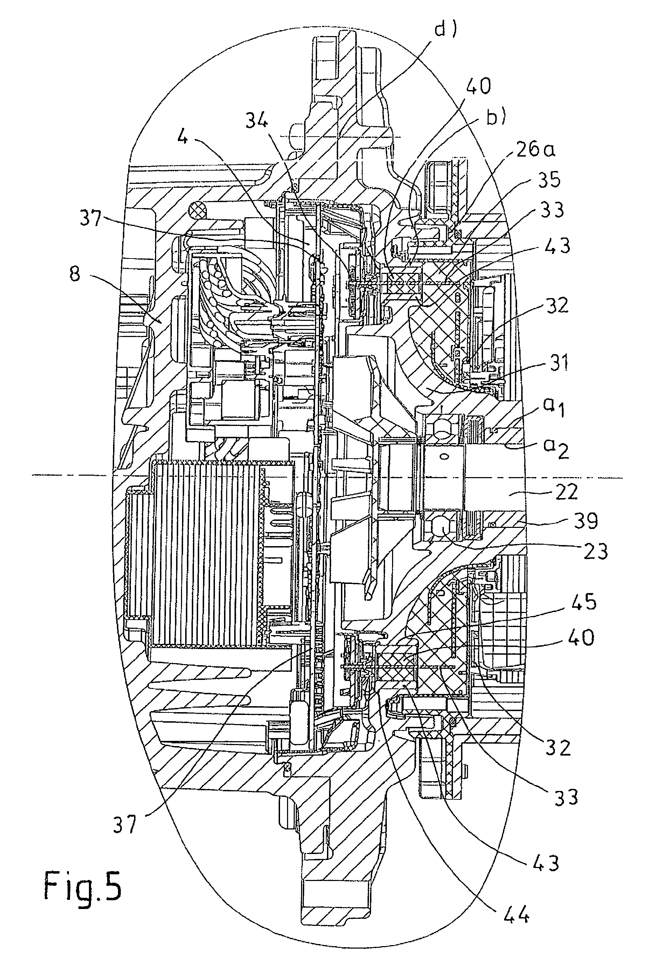

Im Bereich seines Ringflansches 7 ist der Klemmkastenabschnitt C mit dem Statorträger 5 verschraubt. Der Statorträger 5 besteht aus einer Statorbuchse 17 und einem ringförmigen Statorflansch 18, die einstückig den Statorträger 5 bilden. Der Statorflansch 18 besitzt eine umfangsgemäß verlaufende, dem Ringflansch 7 des Klemmkastenabschnitts C zugewandte, ringförmige Anlagefläche 19. An dieser Anlagefläche 19 liegt der Ringflansch 7 umfangsgemäß an, wenn der Klemmkastenabschnitt C und der Statorflansch 18 miteinander verbunden sind. Diese Verbindung zwischen diesen beiden Teilen erfolgt umfangsgemäß mittels durch den Ringflansch 7 verlaufenden, in der Statorflansch-Ringfläche eingeschraubten Schrauben 21. Der Statorträger 5 ist vorzugsweise als Druckgussteil aus Aluminium gefertigt. Innerhalb der hohlzylindrischen Statorbuchse 17 ist eine Rotorwelle 22 insbesondere über axial beabstandete Kugellager 23 drehbar gelagert. Am aus der Statorbuchse 17 herausragenden Ende der Rotorwelle 22 ist der Rotor 2 befestigt. Der Rotor 2 ist topfförmig ausgebildet und besitzt einen kreisförmigen Rotorboden 24 und einen Hohlzylinderabschnitt 26, an dessen Innenwandung Permanentmagnete 27 befestigt sind. Diese umgeben auf der Außenseite der Statorbuchse 17 angeordnete Motorwicklungen 28. Zwischen den Motorwicklungen 28 und dem Permanentmagneten 27 befindet sich ein umfänglicher Luftspalt, so dass der Rotor 2 um die Motorwicklungen 28 frei rotieren kann. In dem Rotorboden 24 ist eine Befestigungshülse 29 eingeschweißt. Mit dieser Befestigungshülse 29 ist die Rotorwelle 22 vorzugsweise mittels Presssitz kraftschlüssig verbunden. Zwischen der Statorbuchse 17 und dem Statorflansch 18 ist ein bogenförmiger Übergangsbereich 31 ausgebildet. Am Umfang dieses Übergangsbereiches 31 ist eine Motorleiterplatte 32 angeordnet (Fig. 5), auf der Anschlusskontakte und ebenfalls Rotorstellungssensoren, insbesondere Hallsensoren angeordnet sind. Mittels auf der Motorleiterplatte 32 angeordneten Anschlusskontakte werden die Motorwicklungen 28 mit ihren Wicklungsenden angeschlossen und mittels Kontaktstiften 33, die durch die Wandung des Statorflansches 18 hindurch verlaufen, mit einer Motorelektronik 34 verbunden. Der Anschlussbereich einschließlich der Hallsensoren ist vorzugsweise mit einer elektrisch isolierenden Vergussmasse 35 ausgegossen, so dass elektrische Überschläge in diesem Anschlussbereich vermieden werden und die Bedingungen der erhöhten Sicherheit nach EN 60079-7 eingehalten werden. An seinem freien Ende ist der hohlzylindrische Abschnitt 26 des Rotors 2 über eine Art Labyrinthdichtung 26a abgedichtet, so dass auch hier eine Dichtung nach der Schutzart IP-44 in Bezug auf Spritzwasserschutz und Staubdichtheit besteht. Insgesamt ist der gesamte Motorabschnitt A als Bereich erhöhter Sicherheit nach EN 60079-7 ausgeführt.

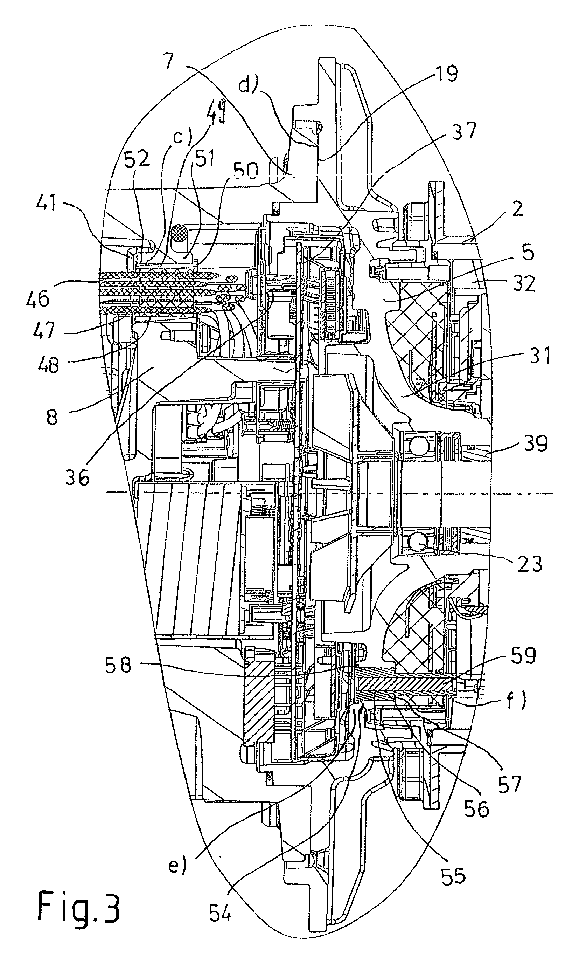

Erfindungsgemäß ist vorgesehen, siehe Fig. 3, dass der zwischen dem Statorflansch 18 und der Trennwand 8 vorhandene Innenraum 4 zur Aufnahme einer Motorelektronik 34 als gasexplosionsgefährdeter Bereich entsprechend EN 60079-1 ausgebildet ist. Die Motorelektronik 34 besitzt eine Motorelektronikleiterplatte 37, auf der die einzelnen Elektronikbauteile und passende Anschlusskontakte befestigt sind. Der die Motorelektronik 34 aufnehmende Innenraum 4 ist als druckfeste Kapselung ausgestaltet, und zwar entsprechend der Norm EN 60079-1. Hierbei muss die Druckfestigkeit bei einer Stückprüfung dem 1,5fachen Bezugsdruck oder dem 4fachen Bezugsdruck einmalig bei einer Zulassungsstelle entsprechen, der bei Zündung eines Gases gemäß den Richtlinien II 2G Ex d (nur druckfester Raum) an mehreren Stellen im Innenraum gemessen auftritt. Hierzu werden erfindungsgemäß alle Durchgangsspalte a), b), c), d) und e) zwischen dem die Motorelektronik 34 aufnehmendem Innenraum 4, das ist der gasexplosionsgefährdete Bereich, und den beiden angrenzenden Abschnitten A, C erhöhter Sicherheit in Bezug auf ihre Spaltlänge in mm und Spaltbreite in mm derart bemessen, dass jeweils am äußeren Ende der Spalte, das heißt an dem die Motorelektronik 34 aufnehmenden Innenraum 4 fernen Ende der Spalte, keine Zündung des jeweiligen den Elektromotor umgebenden Gases erfolgen kann. Das heißt, es kann keine Zündung des Gases im Bereich der erhöhten Sicherheit erfolgen.

Erfindungsgemäß sind folgende Spalte entsprechend der vorliegenden Bemessungsregel zu dimensionieren:

### Spalt a):

Hierbei handelt es sich um den Spalt bzw. die Spalte zwischen der Rotorwelle 22 und der Innenwandung der Statorbuchse 17. Hierbei ist es von Vorteil, wenn in dem kritischen Bereich eine metallische Dichthülse 39 zwischen der Statorbuchse 17 und der Rotorwelle 22 eingesetzt ist. Hierdurch entstehen zwei parallele Umfangsspalte a₁ und a₂. (Fig. 1, Fig. 3).

### Spalt b):

Hierbei handelt es sich um Spalte, die im Bereich von elektrisch isolierenden Durchführungen 40 für Kontaktstifte 33, vorzugsweise Steckkontakten, zwischen dem Kontaktbereich der Motorleiterplatte 32 und den Kontaktbereichen auf der Motorelektronikleiterplatte 37 verlaufen. Diese Durchführungen 40 bestehen aus einem elektrisch isolierenden Glaskörper, in dem die metallischen Kontaktstifte 33, z. B. aus Kobalt oder aus Kupfer, eingegossen sind, sowie aus einem den Glaskörper umfassenden Metallkörper 43, der aus einem Zylinderabschnitt besteht, mit einem einseitig radial nach außen ragenden Ringflansch 44. Der Ringflansch 44 liegt innerhalb des druckfesten Bereichs und liegt an einer radialen Stufenfläche einer den Metallkörper 43, z. B. einem vernickelten Stahlkörper oder Messingkörper, aufnehmenden Durchgangsöffnung 45 im Statorflansch 18 an. Der Glaskörper ist in dem Zylinderabschnitt des Metallkörpers 43 formschlüssig eingeschlossen. Er hat keine Funktion für die druckfeste Kapselung.

### Spalt c):

Hierbei handelt es sich um den oder die Spalte im Bereich von elektrisch isolierenden Durchführungen 41 für Litzen oder Kontaktstifte 46 von Steckkontakten zur elektrischen Verbindung der Anschlussklemmen 11 des Klemmkastenabschnittes C mit entsprechenden Gegenkontakten auf der Motorelektronikleiterplatte 37 (Fig. 3). Diese Durchführungen 41 bestehen aus einem elektrisch isolierenden Kunststoffkörper 47, in dem die Kontaktstifte 46 eingegossen sind. Der Kunststoffkörper 47 befindet sich in einer Metallhülse 48 aus einem den Kunststoffkörper 47 umfassenden Zylinderabschnitt 49 und einem endseitig an diesem radial nach außen weisenden Ringflansch 50. Der Ringflansch 50 liegt an einer radialen Stufenfläche 51 einer Aufnahmebohrung 52 für die Metallhülse 48 in der Trennwand 8 an. Die Metallhülse 48 wird durch eine Schraube gehalten und die spaltfreie Verbindung erfolgt durch Hinterschnitte in der Metallhülse 48.

### Spalt d):

Hierbei handelt es sich um einen radial nach außen verlaufenden Spaltabschnitt im Anlagebereich des Ringflansches 7 des Klemmkastenabschnitts C an dem diesen gegenüberliegenden Statorflansch 18 im Bereich der Anlagefläche 19.

Da in diesem Bereich auch Durchgangsbohrungen für die Schrauben 21 verlaufen, ist auch ein bestimmter umfangsgemäßer Abstand zwischen diesen Durchgangsbohrungen einzuhalten. Dieser ist nach Norm EN 60079-1 bemessen. Diejenigen Spaltabschnitte, die zu dem Spalt d) senkrecht verlaufen, sind für die Berechnung der maßgeblichen Spaltlänge nicht heranzuziehen.

### Spalt e):

Hierbei handelt es sich um einen Spalt, der sich am Umfang eines Belüftungskörpers 54 innerhalb der Wandung des Statorflansches 18 befindet (Fig. 3). Dieser vorteilhafterweise vorgesehene Belüftungskörper 54 besitzt eine Durchgangsbohrung 55, so dass eine Verbindung zwischen dem druckfesten Innenraum 4 zur Aufnahme der Motorelektronik und dem Motorinnenraum innerhalb des Rotors 2 vorhanden ist, über die ein Druckausgleich erfolgen kann. Dieser Belüftungskörper 54 besteht aus einer metallischen Hülse 56, z. B. aus vernickeltem Stahl oder Aluminium, die in eine Durchgangsbohrung 57 des Statorflansches 18 eingesetzt ist. Auf der dem druckfesten Innenraum 4 zugekehrten Seite ist an der metallischen Hülse 56 ein Ringflansch 58 ausgebildet, der an einer Stufenfläche der Durchgangsbohrung 57 anliegt. Die metallische Hülse 56 ist in ihrem an den Ringflansch 58 anschließenden Bereich in zwei hohlzylindrische Hülsenabschnitte mit unterschiedlichem Außendurchmesser aber gleichem Innendurchmesser ausgebildet. Der Hülsenabschnitt mit dem ersten Außendurchmesser verläuft innerhalb eines Wandungsabschnittes des Statorflansches 18. Hieran schließt sich der Bereich mit dem zweiten kleineren Außendurchmesser an, dessen Länge mindestens der Länge des Anschnitts mit dem größeren Durchmesser entspricht. In der Durchgangsbohrung der metallischen Hülse 56 ist ein Metallstift 59, z. B. aus Stahl, befestigt, z. B. verpresst oder vercrimpt. Durch diese Ausgestaltung ist ein Spalt f) zwischen der Wandung der Hülse 56 und dem Metallstift 59 ausgebildet, der mindestens der Länge des Spaltes e) entspricht.

Die Erfindung basiert auf der Erkenntnis, dass nur der Bereich, der die Motorelektronik aufnimmt, als druckfeste Kapselung gemäß EN 60079-1 ausgebildet wird, und die übrigen Bereiche als Bereiche erhöhter Sicherheit ausgebildet werden, entsprechend EN 60079-7. Danach ist es erfindungsgemäß nicht erforderlich, die in Bereichen erhöhter Sicherheit ausgebildeten Dichtungen druckfest auszubilden, so dass diese Bereiche geöffnet werden können. Insbesondere im Klemmkastenabschnitt C werden Bauteile verwendet, die die Norm der erhöhten Sicherheit gemäß EN 60079-7 ebenfalls erfüllen und dies gilt ebenfalls für den Vergussbereich im Bereich der Motorleiterplatte 32.

## Patentansprüche

1. Gleichstrom-Elektromotor mit einem Motorwicklungen (28) aufweisenden Stator (1) und einem diesen umfassenden als Außenläufer ausgebildeten Rotor (2) sowie mit einem Motorgehäuse (3), bestehend aus einem Klemmkastenabschnitt (C) und einem den Rotor (2) und Stator (1) aufweisenden Motorabschnitt (A) sowie einem zwischen dem Motorabschnitt (A) und dem Klemmkastenabschnitt (C) angeordneten Elektronikgehäuseabschnitt (B), in dessen Innenraum (4) eine Motorelektronik (34) angeordnet ist,
**dadurch gekennzeichnet, dass** der die Motorelektronik (34) aufnehmende Elektronikgehäuseabschnitt (B) als integraler Teil des Motorgehäuses (3) in explosionsgeschützter Bauart nach der EG-Richtlinie 94/9/EG gemäß II 2G Ex d e ib ausgebildet ist, dessen Innenraum (4) eine druckfeste Kapselung nach EN 60079-1 bildet und die anderen Motorabschnitte (A, C) als Bereiche mit erhöhter Sicherheit nach EN 60079-7 ausgebildet sind, wobei zwischen dem Innenraum (4) des Elektronikgehäuseabschnitts (B) und den Motorabschnitten (A, C) mit erhöhter Sicherheit elektrisch isolierende Kontaktdurchführungen (39, 41) angeordnet sind, deren Ringspalte (b), c)) in Bezug auf ihre Spaltbreite in mm und Spaltlänge in mm derart bemessen sind, dass an in den Bereichen erhöhter Sicherheit (A, C) liegenden Spaltenden des jeweiligen Ringspaltes (b), c)) eine Temperatur in °C vorhanden ist, die in jedem Betriebszustand des Elektromotors unterhalb einer gasspezifischen Zündtemperatur eines den Elektromotor umgebenden Gases liegt.

2. Elektromotor nach Anspruch 1,
**dadurch gekennzeichnet, dass** der Stator (1) aus einer Statorbuchse (17) und einem Statorflansch (18) besteht, der mit dem Klemmkastenabschnitt (C) lösbar verbunden ist, wobei zwischen dem Statorflansch (18) und dem Klemmkastenabschnitt (C) ein vom Innenraum (4) des die Motorelektronik (34) aufweisenden Motorelektronikabschnittes (B) ein in radialer Richtung verlaufender Spalt (d)) eine derartige Länge in mm und Spaltbreite in mm besitzt, dass in jedem Betriebszustand des Elektromotors am äußeren Spaltende eine Temperatur in °C vorhanden ist, die unterhalb einer gasspezifischen Zündtemperatur eines des Elektromotor umgebenden Gases liegt.

3. Elektromotor nach Anspruch 2 ,
**dadurch gekennzeichnet, dass** in der Statorbuchse (17) des Stators (1) eine Rotorwelle (22) drehbar gelagert ist und ein zwischen der Rotorwelle (22) und der Statorbuchse (17) befindlicher in axialer Richtung der Rotorwelle (22) verlaufender, vom Innenraum des Elektronikgehäuseabschnittes aus nach außen verlaufender Umfangsspalt (a₁, a₂) in Bezug auf seine Spaltbreite in mm und seine Spaltlänge in mm derart bemessen ist, dass in jedem Betriebszustand des Elektromotors am außenliegenden Ende des Umfangsspaltes (a₁, a₂) eine Temperatur in °C vorhanden ist, die unterhalb einer gasspezifischen Zündtemperatur eines den Elektromotor umgebenden Gases liegt.

4. Elektromotor nach Anspruch 1,
**dadurch gekennzeichnet, dass** die elektrisch isolierenden Kontaktdurchführungen (39, 41) sowie innerhalb des Klemmkastenabschnittes (C) und innerhalb des Motorabschnitts (A) vorhandene elektrische Anschlusskontakte und Sensorelemente und elektrische Anschlüsse entsprechend der Bauart nach EG-Richtlinie 94-9-EG für erhöhte Sicherheit nach EN 60079-7 ausgebildet sind.

5. Elektromotor nach einem der Ansprüche 1 bis 4,
**dadurch gekennzeichnet, dass** im Klemmkastenabschnitt (C) ein Hohlraum (9) vorhanden ist, in den ein elektrisches Anschlusskabel (12) mittels einer Kabelverschraubung (13) eingeführt und innerhalb des Hohlraums (9) mit elektrischen Anschlussklemmen (11) verbunden ist, wobei die elektrischen Anschlussklemmen (11) sowie die Kabelverschraubung (13) entsprechend der Norm EN 60079-7 für erhöhte Sicherheit ausgebildet sind.

6. Elektromotor nach einem der Ansprüche 1 bis 5,
**dadurch gekennzeichnet, dass** innerhalb des Motorabschnittes (A) eine Motorleiterplatte (32) angeordnet ist, auf der Anschlusskontakte für die Motorwicklung (28) und für Kontaktstifte (33) vorgesehen sind, die durch die Wandung des Statorflansches (8) hindurch verlaufen sowie Rotorstellungssensoren, und dass der Anschlussbereich der Kontakte einschließlich der Rotorstellungssensoren mit einer elektrisch isolierenden Vergussmasse (35) ausgegossen ist, so dass den Anforderungen gemäß der Norm EN 60079-7 für erhöhte Sicherheit entsprochen wird.

7. Elektromotor nach einem der Ansprüche 1 bis 6,
**dadurch gekennzeichnet, dass** der Stator (1) einen Statorträger (5) besitzt, der aus einer Statorbuchse (17) und einem Statorflansch besteht, wobei in der Statorbuchse (17) eine Rotorwelle (22) drehbar gelagert ist und zwischen der Rotorwelle (22) und der Innenwandung der Statorbuchse (17) eine Dichthülse (39) im Übergang zum Statorflansch zwischen der Statorbuchse (17) und der Rotorwelle (22) eingesetzt ist, wobei an der Innenseite und der Außenseite der Dichthülse (39) jeweils Umfangsspalte (a₁, a₂) ausgebildet sind.

8. Elektromotor nach einem der Ansprüche 1 bis 7,
**dadurch gekennzeichnet, dass** die elektrisch isolierenden Durchführungen (40) für Kontaktstifte (33) zwischen dem Kontaktbereich der Motorleiterplatte (32) und den Kontaktbereichen auf einer Motorelektronikleiterplatte (37) im druckfesten Innenraum (4) aus einem elektrisch isolierenden Körper, insbesondere einem Glaskörper bestehen, in dem die metallischen Kontaktstifte (33) eingegossen sind sowie aus einem den Glaskörper umfassenden Metallkörper (43), der aus einem Zylinderabschnitt besteht, mit einem einseitig radial nach außen ragenden Ringflansch (44), wobei der Ringflansch (44) innerhalb des druckfesten Bereichs im Innenraum (4) liegt und an einer radialen Stufenfläche einer Durchgangsöffnung (45) im Statorflansch (18) anliegt.

9. Elektromotor nach einem der Ansprüche 1 bis 8,
**dadurch gekennzeichnet, dass** die elektrisch isolierenden Durchführungen (41) für Litzen oder Kontaktstifte (46) von Steckkontakten zur elektrischen Verbindung der Anschlussklemmen (11) im Klemmkastenabschnitt (C) mit entsprechenden Gegenkontakten auf der Motorelektronikleiterplatte (37) im Innenraum (4) aus einem elektrisch isolierenden Kunststoffkörper (47) bestehen, in dem die Litzen oder Kontaktstifte (46) eingegossen sind, und der Kunststoffkörper (47) sich in einer Metallhülse (48) befindet, die aus einem Zylinderabschnitt (49) und einem endseitig an diesem radial nach außen weisenden Ringflansch (50) besteht, wobei der Ringflansch (50) an einer radialen Stufenfläche (51) einer Aufnahmebohrung (52) für die Metallhülse (48) in einer Trennwand (8) zwischen dem Innenraum (4) und dem Klemmkastenabschnitt (C) anliegt.

10. Elektromotor nach einem der Ansprüche 1 bis 9,
**dadurch gekennzeichnet, dass** innerhalb der Wandung des Statorflansches (18) ein Belüftungskörper (54) angeordnet ist, der eine Durchgangsbohrung (55) aufweist und von einer metallischen Hülse (56) gebildet wird.

11. Elektromotor nach Anspruch 10,
**dadurch gekennzeichnet, dass** die metallische Hülse (56) einen Hülsenabschnitt mit einem ersten Außendurchmesser aufweist, der innerhalb eines Wandungsabschnittes des Statorflansches (18) verläuft sowie einem daran anschließenden Bereich mit einem diesem gegenüber kleineren Außendurchmesser, wobei die beiden Wandungsabschnitte mindestens gleich lang sind, wobei in der Durchgangsbohrung der metallischen Hülse (56) ein Metallstift (59) fixiert ist, wodurch im Innern der metallischen Hülse (56) ein Spalt (f)) zwischen der Wandung der Hülse (56) und dem Metallstift (59) ausgebildet ist, der mindestens doppelt so lang ist wie der Spalt (e)) am äußeren Umfang der metallischen Hülse (56).

## Claims

1. A direct current electromotor with a stator (1) comprising motor windings (26) and with a rotor (2) constructed as an outside rotor comprising the stator, and with a motor housing (3) consisting of a terminal box section (C) and a motor section (A) comprising the rotor (2) and the stator (1) and with an electronics housing section (B) arranged between the motor section (A) and the terminal box section (C) in the inner space (4) of which housing section a motor electronics (34) is arranged,
**characterized in that** the housing section (B) that receives the motor electronics (34) is constructed as an integral part of the motor housing (3) in an explasion-protected construction according to the EG Guideline 94/9/EG according to II 2G Ex d e ib, whose inner space (4) forms a pressure-resistant encapsulation according to EN 60079-1 and that the other motor sections (A, C) are constructed as areas with increased safety according to EN 60079-7, wherein electrically insulating contact bushings (39, 41) are arranged between the inner space (4) of the electronic housing section (B) and the motor sections (A, C) with increased safety, whose annular slots (b), c)) are measured as regards their slot width in mm and their slot length in mm such a manner that a temperature in °C is present at the slot ends of the particular annual slot (b), c)) located in the areas of increased safety (A, C) which temperature is below a gas-specific ignition temperature of a gas surrounding the electromotor in every operating state of the electromotor.

2. The electromotor according to Claim 1,
**characterized in that** the stator (1) consists of a stator socket (17) and a stator flange (18) that is detachably connected to the terminal box section (C), wherein a slot (d)) running in the radial direction from the inner space (4) of the motor electronics section (B) between the stator flange (18) and the terminal box section (C) has such a length in mm and a slot width in mm that a temperature in °C is present in each operating state of the electromotor at the outer slot end which is below a gas-specific ignition temperature of a gas surrounding the electromotor.

3. The electromotor according to Claim 2,
**characterized in that** a rotor shaft (22) is rotatably supported in the stator socket (17) of the stator (1) and that a circumferential slot (a₂, a₂) located between the rotor shaft (22) and the stator socket (17) and running in the axial direction of the rotor shaft (22) outwardly from the inner space of the electronics housing section is dimensioned in its slot width in mm and its slot length in mm in such a manner that that a temperature is present in °C in each operating state of the electromotor on the outer end of the circumferential slot (a₁, a₂) which is below a gas-specific ignition temperature of a gas surrounding the electromotor.

4. The electromotor according to Claim 1,
**characterized in that** the electrically insulating contact bushings (39, 41) as well as electrical connection contacts present inside the terminal box section (C) and inside the motor section (A) and sensor elements and electrical connections in accordance with the construction according to EG Guideline 94-9 for increased safety are constructed according to EN 60079-7.

5. The electromotor according to one of Claims 1 to 4,
**characterised in that** a hollow space (9) is present in the terminal box section (C) into which space an electrical connection cable (12) is introduced by a cable screwing (13) and is connected in the hollow space (9) to electrical connection clamps (11) and that the electrical connection clamps (11) and the cable screwing (13) are constructed according to the norm EN 60079-7 for increased security,

6. The electromotor according to one of Claims 1 to 5,
**characterized in that** a motor printed circuit board (32) is arranged inside the motor section (A) on which connection contacts for the motor winding (28) and for contact pins (33) are provided that run through the wall of the stator flange (8) as well as rotor position sensors, and that the connection area of the contacts including the rotor position sensors is cast with an electrically insulating cast mass (35) so that the requirements according to norm EN 60079-7 for increased safety are met.

7. The electromotor according to one of Claims 1 to 6,
**characterized in that** the stator (1) comprises a stator carrier (5) that consists of a stator socket (17) and a stator flange, wherein a rotor shaft (22) is rotatably supported in the stator socket (17) and a sealing casing (39) between the rotor shaft (22) and the inner wall of the stator socket (17) is inserted in the transition to the stator flange between the stator socket (17) and the rotor shaft (22), wherein circumferential slots (a₁, a₂) are formed on the inside and outside of the sealing casing (39).

8. The electromotor according to one of Claims 1 to 7,
**characterized in that** the electrically insulating bushings (40) for contact pins (33) between the contact area of the motor printed circuit board (32) and the contact areas on a motor electronics circuit printed board (37) and the pressure-resistant inner space (4) consists of an electrically insulating body, in particular a glass body into which the metallic contact pins (33) are cast as well as of a metallic body (43) surrounding the glass body which metallic body consists of a cylindrical section with an annular flange (44) protecting radially outward on one side, wherein the annular flange (44) is located inside the pressure-resistant area in the inner space (4) and rests on a radial graduated surface of a through opening (45) in the stator flange (18).

9. The electromotor according to one of Claims 1 to 8,
**characterized in that** the electrically insulating bushings (41) for stranded wires or contact pins (46) cf plug contacts for the electrical connection of the connection clamps (11) in the terminal box section (C) with corresponding countercontacts of the motor electronics printed circuit board (37) in the inner space (4) consist of an electrically insulating plastic body (47) intro which the stranded wires or contact pins (46) are cast, and the plastic body (47) is located in a metallic casing (48) consisting of a cylindrical section (49) and an annular flange (50) facing radially outward on the latter on an end, wherein the annular flange (50) rests on a radial graduated surface (51) of a receiving bore (52) for the metallic casing (48) in a separating wall (8) between the inner space (4) and the terminal box section (C).

10. The electromotor according to one of Claims 1 to 9,
**characterized in that** a ventilation body (54) is arranged inside the wall of the stator flange (18) which comprises a bushing (55) and is formed by a metallic casing (56).

11. The electromotor according to Claim 10,
**characterised in that** the metallic casing (56) comprises a casing section with a first outside diameter that runs inside a wall section of the stator flange (18) and with an area adjacent to it that has an outside diameter smaller in comparison to the latter, wherein the two wall sections are at least equally long, wherein a metallic pin (59) is fixed in the through bore of the metallic casing (56), as a consequence of which a slot (f)) is formed in the inside of the metallic casing (56) between the wall of the casing (56) and the metallic pin (59) which slot is at least twice as long as the slot (e)) on the outer circumference of the metallic casing (56).

## Revendications

1. Moteur électrique à courant continu comprenant un stator (1) présentant des enroulements de moteur (28) et un rotor (2) réalisé sous la forme d'un induit extérieur encadrant ledit stator ainsi qu'un carter de moteur (3), constitué d'une partie boîtier à bornes (C) et d'une partie moteur (A) comprenant le rotor (2) et le stator (1) ainsi que d'une partie carter électronique (B) disposée entre la partie moteur (A) et la partie boîtier à bornes (C), dans l'espace intérieur (4) de laquelle un système électronique de moteur (34) est disposé,
**caractérisé en ce que** la partie carter électronique (B) longeant le système électronique de moteur (34) est réalisé sous la forme d'une partie intégrante du carter de moteur (3) selon un type de construction à protection anti-déflagration selon la directive CE 94/9/CE selon II 2G Ex d e ib, dont l'espace intérieur (4) forme un système d'encapsulage résistant à la pression selon la norme EN 60079-1, et **en ce que** les autres parties moteur (A, C) sont réalisées sous la forme de zones présentant une sécurité élevée selon la norme EN 60079-7, sachant que sont disposés entre l'espace intérieur (4) de la partie boîtier électronique (B) et les parties moteur (A, C) présentant une sécurité élevée, des passages de contact (39, 41) à isolation électrique, dont les fentes annulaires (b, c) présentent, eu égard à leur largeur de fente en mm et à leur longueur de fente en mm, des dimensions telles qu'est présente, au niveau des extrémités de fente, se trouvant dans les zones à sécurité élevée (A, C), de la fente annulaire (b, c) respective, une température en °C, qui est inférieure, dans chaque état de fonctionnement du moteur électrique, à une température d'inflammation spécifique à un gaz d'un gaz entourant le moteur électrique.

2. Moteur électrique selon la revendication 1,
**caractérisé en ce que** le stator (1) est constitué d'une douille de stator (17) et d'une bride de stator (18), qui est reliée de manière amovible à la partie boîtier à bornes (C), sachant qu'entre la bride de stator (18) et le boîtier à bornes (C) une fente (d) s'étendant depuis l'espace intérieur (4) de la partie électronique de moteur (B) présentant le système électronique de moteur (34) dans la direction radiale possède une longueur en mm et une largeur de fente en mm telles qu'est présente, dans chaque état de fonctionnement du moteur électrique, au niveau de l'extrémité de fente extérieure, une température en °C, qui est inférieure à une température d'inflammation spécifique à un gaz d'un gaz entourant le moteur électrique.

3. Moteur électrique selon la revendication 2,
**caractérisé en ce qu'**un arbre de rotor (22) est monté de manière à pouvoir tourner dans la douille de stator (17) du stator (1), et **en ce qu'**une fente périphérique (a₁, a₂) se trouvant entre l'arbre de rotor (22) et la douille de stator (17), s'étendant dans la direction axiale de l'arbre de rotor (22), s'étendant depuis l'espace intérieur de la partie boîtier électronique vers l'extérieur présente, eu égard à sa largeur de fente en mm et à sa longueur de fente en mm, des dimensions telles qu'est présente, dans chaque état de fonctionnement du moteur électrique, au niveau de l'extrémité située côté extérieur de la fente périphérique (a₁, a₂), une température en °C, qui est inférieure à une température d'inflammation spécifique à un gaz d'un gaz entourant le moteur électrique.

4. Moteur électrique selon la revendication 1,
**caractérisé en ce que** les passages de contact (39, 41) à isolation électrique ainsi que des contacts de raccordement électriques et des éléments de capteur et des raccords électriques présentes à l'intérieur de la partie boîtier à bornes (C) et à l'intérieur de la partie moteur (A) sont réalisés de manière conforme au type de construction selon la directive CE 94/9/CE pour une sécurité élevée selon la norme EN 60079-7.

5. Moteur électrique selon l'une quelconque des revendications 1 à 4,
**caractérisé en ce qu'**est présent, dans la partie boîtier à bornes (C), un espace creux (9), dans lequel un câble de raccordement (12) électrique est introduit au moyen d'un vissage de câble (13) et est relié à l'intérieur de l'espace creux (9) à des bornes de raccordement (11) électriques, sachant que les bornes de raccordement (11) électriques ainsi que le vissage de câble (13) sont réalisés de manière conforme à la norme EN 60079-7 pour une sécurité élevée.

6. Moteur électrique selon l'une quelconque des revendications 1 à 5,
**caractérisé en ce qu'**une plaque conductrice de moteur (32) est disposée à l'intérieur de la partie moteur (A), sur laquelle sont prévus des contacts de raccordement pour l'enroulement de moteur (28) et pour des tiges de contact (33), qui s'étendent à travers la paroi de la bride de stator (8), ainsi que des capteurs de position de rotor, et **en ce que** la zone de raccordement des contacts y compris des capteurs de position de rotor est scellée avec une masse de scellement (35) à isolation électrique de manière à se conformer aux exigences selon la norme EN 60079-7 pour une sécurité élevée.

7. Moteur électrique selon l'une quelconque des revendications 1 à 6,
**caractérisé en ce que** le stator (1) possède un support de stator (5), qui est constitué d'une douille de stator (17) et d'une bride de stator, sachant qu'un arbre de rotor (22) est monté de marnière à pouvoir tourner dans la douille de stator (17) et qu'une douille d'étanchéité (39) est insérée dans le passage menant à la bride de stator entre la douille de stator (17) et l'arbre de rotor (22), entre l'arbre de rotor (22) et la paroi intérieure de la douille de stator (17), sachant que respectivement des fentes périphériques (a₁, a₂) sont réalisées au niveau du côté intérieur et au niveau du côté extérieur de la douille d'étanchéité (39).

8. Moteur électrique selon l'une quelconque des revendications 1 à 7,
**caractérisé en ce que** les passages (40) à isolation électrique pour des tiges de contact (33) entre la zone de contact de la plaque conductrice de moteur (32) et les zones de contact sur une plaque conductrice de système électronique de moteur (37) dans l'espace intérieur (4) résistant à la pression sont constitués d'un corps à isolation électrique, en particulier d'un corps en verre, dans lequel les tiges de contact (33) métalliques sont scellées, ainsi que d'un corps en métal (43) entourant le corps en verre, lequel est constitué d'une partie cylindrique, avec une bride annulaire (44) dépassant d'un côté radialement vers l'extérieur, sachant que la bride annulaire (44) se trouve à l'intérieur de la zone résistante à la pression dans l'espace intérieur (4) et qu'elle repose au niveau d'une surface étagée radiale d'une ouverture de passage (45) dans la bride de stator (18).

9. Moteur électrique selon l'une quelconque des revendication 1 à 8,
**caractérisé en ce que** les passages (41) à isolation électrique pour des torons ou des tiges de contact (46) de contacts enfichables servant à relier électriquement les bornes de raccordement (11) dans la partie boîtier à bornes (C) à des contacts complémentaires correspondants sur la plaque conductrice de système électronique de moteur (37) dans l'espace intérieur (4) sont constitués d'un corps en plastique (47) à isolation électrique, dans lequel les torons ou les tiges de contact (46) sont scellés, et **en ce que** le corps en plastique (47) se trouve dans une douille en métal (48), qui est constituée d'une partie cylindrique (49) et d'une bride annulaire (50) pointant côté extrémité sur cette derrière radialement vers l'extérieur, sachant que la bride annulaire (50) repose au niveau d'une surface étagée (51) radiale d'un alésage de réception (52) pour la douille en métal (48) dans une cloison de séparation (8) entre l'espace intérieur (4) et la partie boîtier à bornes (C).

10. Moteur électrique selon l'une quelconque des revendications 1 à 9,
**caractérisé en ce qu'**est disposé, à l'intérieur de la paroi de la bride de stator (18), un corps d'aération (54), qui présente un alésage de passage (55) et qui est formé par une douille (56) métallique.

11. Moteur électrique selon la revendication 10,
**caractérisé en ce que** la douille (56) métallique comprend une partie douille présentant un premier diamètre extérieur, qui s'étend à l'intérieur d'une partie de paroi de la bride de stator (18), ainsi qu'une zone située dans le prolongement présentant un diamètre extérieur plus petit par rapport à ladite zone, sachant que les deux parties de paroi sont au moins de même longueur, sacrant qu'une tige en métal (59) est fixée dans l'alésage de passage de la douille (56) métallique, ce qui permet de réaliser, à l'intérieur de la douille (56) métallique, une fente (f) entre la paroi de la douille (56) et la tige en métal (59), laquelle fente est au moins deux fois plus longue que la fente (e) au niveau de la périphérie extérieure de la douille (56) métallique.
